# EUROPEAN PATENT APPLICATION

(11) **EP 2 445 222 A2**
(43) Date of publication of application: **25.04.2012**
(21) Application number: 11179647.0
(22) Date of filing: 31.08.2011
(51) Int. Cl.: H04N 13/00

(54) **Three-dimensional image display apparatus and image display method thereof**

(30) Priority: 25.10.2010 KR 20100103962
(71) Applicant: Samsung Electronics Co., Ltd., Suwon-si, Gyeonggi-do 442-742 (KR)
(72) Inventor: Oh, Keum-yong, Gyeonggi-do (KR)
(74) Representative: Fearnside, Andrew Simon

(57) **Abstract**

A three dimensional (3D) image display apparatus is provided. The 3D image display apparatus includes a receiving unit which receives a transport stream (TS) including a content image and an additional image, an information detecting unit which detects 3D depth information for the content image, an additional image processing unit which applies the 3D depth information detected by the information detecting unit to the additional image, and an output unit which displays the additional image, to which the 3D depth information is applied, along with the content image.

## Description

### CROSS-REFERENCE TO RELATED APPLICATION

This application claims priority from Korean Patent Application No. 10-2010-0103962, filed on October 25, 2010 in the Korean Intellectual Property Office, the disclosure of which is incorporated herein by reference in its entirety.

### BACKGROUND

### 1. Field

Apparatuses and methods consistent with exemplary embodiments provided herein relate to a three-dimensional (3D) image display apparatus and an image display method thereof, and more particularly though not exclusively, to a 2 transport stream (2TS) image-based 3D display apparatus and an image display method thereof.

### 2. Description of the Related Art

Moving Picture Experts Group (MPEG) standards specify two data formats for compression and transport of digital video, which are, program stream (PS) and transport stream (TS).

PS is generally used for storing digital video onto a recording medium having a lower error of transport, while TS, with a fixed packet length, is generally used for digital broadcast having relatively unstable transport channel.

Current streaming service methods using TS, control one of TS and transmits and receives TS based on a MPEG transmitting and receiving system.

The lengths of all the contents within TS are controlled dynamically based on offset values. However, no specific reference is set for special application for contents other than TS.

For example, currently in picture-in-picture (PlP) no scenario is provided along with the 3D image and even if a scenario were provided, the image would cause eye strain when the depth in PIP does not match the dynamically-changing depth.

### SUMMARY

Exemplary embodiments of the present inventive concept overcome the above disadvantages and/or other disadvantages not described above. Also, the present inventive concept is not required to overcome the disadvantages described above, and an exemplary embodiment of the present inventive concept may not overcome any of the problems described above.

According to the present invention there is provided an apparatus and method as set forth in the appended claims. Other features of the invention will be apparent from the dependent claims, and the description which follows.

One or more embodiments provide a 3D image display apparatus and an image display method thereof are provided, which may provide 3D effect with respect to additional images as well as content image.

According to an aspect of an exemplary embodiment, there is provided a 3D image display apparatus including a receiving unit which receives a TS including content image and additional image, an information detecting unit which detects 3D depth information preset for the content image, an additional image processing unit which applies the detected 3D depth information to the additional image, and an output unit which displays the additional image, to which the 3D depth information is applied, along with the content image.

The TS is 2TS that includes a first TS corresponding to one of left-eye image and right-eye image of the 3D TS and a second TS corresponding to the other of the left-eye image and right-eye image of the 3D TS.

The first TS corresponds to a base TS and the second TS corresponds to a dependent TS, and the 3D depth information is included in the dependent TS.

The additional image is at least one of on-screen display (OSD) image, application image and PIP image.

The first and second TS are displayed alternately.

The additional image is displayed with the 3D depth information identical to that of the corresponding content image.

The 3D depth information is set for respective frames that form the TS.

According to an aspect of another exemplary embodiment, there is provided an image display method of a 3D image display apparatus, the method including receiving a TS including content image and additional image, detecting 3D depth information preset for the content image, applying the detected 3D depth information to the additional image, and displaying the additional image, to which the 3D depth information is applied, along with the content image.

The TS is 2TS that includes a first TS corresponding to one of left-eye image and right-eye image of the 3D TS and a second TS corresponding to the other of the left-eye image and right-eye image of the 3D TS.

The first TS corresponds to a base TS and the second TS corresponds to a dependent TS, and the 3D depth information is included in the dependent TS.

The additional image is at least one of OSD image, application image and PIP image.

The first and second TS are displayed alternately.

The additional image is displayed with the 3D depth information identical to that of the corresponding content image.

The 3D depth information is set for respective frames that form the TS.

Accordingly, 3D effect is provided to the additional image as well as the main images.

### BRIEF DESCRIPTION OF THE DRAWINGS

The above and/or other aspects will be more apparent by describing certain exemplary embodiments with reference to the accompanying drawings, in which:

FIG. 1 is a view illustrating a 3D image providing system according to an exemplary embodiment;

FIG. 2A is a block diagram illustrating a structure of a 3D image display apparatus according to an exemplary embodiment;

FlG. 2B is a block diagram illustrating a detailed structure of an image processing unit of FlG. 2A;

FIG. 2C is a block diagram illustrating a detailed structure of an additional image processing unit of FIG. 2A;

FlG. 3 is a view illustrating an example of implementing a 3D image display apparatus according to an exemplary embodiment;

FIGS. 4A and 4B are views illustrating the concept of 3D offset value to help understand an embodiment;

FIG. 5A is a view provided to explain a pattern of 3D information insertion according to an exemplary embodiment;

FIG. 5B is a view illustrating the form of offset metadata according to an exemplary embodiment;

FIG. 5C is a view provided to explain a method for inserting 3D information according to an exemplary embodiment;

FIGS. 6A to 6C are views provided to explain a method for applying 3D to additional image according to various exemplary embodiments; and

FIG. 7 is a flowchart provided to explain a display method according to an exemplary embodiment.

### DETAlLED DESCRlPTlON OF EXEMPLARY EMBODlMENTS

Certain exemplary embodiments of the present inventive concept will now be described in greater detail with reference to the accompanying drawings.

In the following description, same drawing reference numerals are used for the same elements even in different drawings. The matters defined in the description, such as detailed construction and elements, are provided to assist in a comprehensive understanding of the present inventive concept. Accordingly, it is apparent that the exemplary embodiments of the present inventive concept can be carried out without those specifically defined matters. Also, well-known functions or constructions are not described in detail since they would obscure the inventive concept with unnecessary detail.

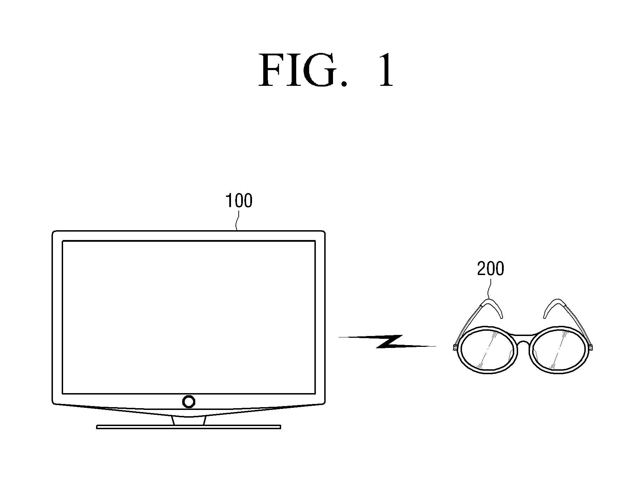

FlG. 1 is a view illustrating a 3D image providing system according to an exemplary embodiment. As illustrated, the 3D image providing system includes a 3D image display apparatus 100 to display 3D image on a screen, and 3D glasses 200 with which a user views the 3D image.

The 3D image display apparatus 100 may be implemented to either display 3D images, or display both the 2D and 3D images.

The image display apparatus 100 displaying 2D images may adopt the same methods as the conventional 2D display apparatuses, and the image display apparatus 100 display 3D images may convert the received 2D images into 3D images and display the converted images on the screen. As necessary, the 3D image display apparatus 100 may receive a 3D image, which is either received from a photographing apparatus including camera, or photographed through a photographing apparatus including camera and then edited/processed and transmitted from a broadcasting station, and process the received 3D image and display the processed image on a screen.

To be specific, the 3D image display apparatus 100 may process the received image into left-eye images and right-eye images with reference to 3D image format, so that the processed left-eye and right-eye images are time-divided and displayed alternately. Accordingly, the user wearing the 3D glasses 200 sees the 3D image as his left and right eyes see the left-eye and right-eye images alternately.

Generally, an observing person sees one object through his left and right eyes at slightly different positions and thus perceives slightly differing image information through his left and right eyes. The observing person combines this slightly differing image information to acquire depth information about the obstacle and thus has the feeling of depth.

When a viewer observes an object, the 3D image display apparatus 100 according to an exemplary embodiment causes a viewer to have the feeling of depth by providing images for perception at the viewer's left and right eyes. The difference between images for left and right eyes of the viewer is 'disparity'. When disparity has positive value, the viewer feels as if the object moves closer to him. When the disparity has a negative value, the viewer feels as if the object moves further away from him.

The 3D glasses 200 may be implemented to be an active type of shutter glasses. The shutter glasses are based on a display method utilizing disparity between the left and right eyes. By synchronizing on-off of left and right eyes of the glasses to the images provided by the display apparatus, the shutter glasses cause the viewer to perceive an illusion of depth based on the images observed at different angles from each other.

The principle of shutter glasses is to synchronize the left and right image frames reproduced from the 3D image display apparatus 100 to the shutter mounted to the 3D glasses 200. That is, the left- and right-side glasses selectively open and close in accordance with the synchronous signals of left- and right-eye images of the 3D image display apparatus 100, to construct a 3D image.

Meanwhile, the 3D image display apparatus 100 may display a 3D user interface (particularly, graphical user interface (GUI)) along with the 3D image on the screen. The GUI herein refers to elements with which a user inputs a command by selecting an icon or a menu displayed on a display. For example, using the GUl, the user may move a curser based on the menus, lists, or icons displayed on the display, and select an item on which the curser is placed.

For 3D effect, the 3D image display apparatus 100 may implement 3D GUI by simply regulating disparity between left-eye GUI and right-eye GUI. Accordingly, 3D GUI is provided without having to carry out separate image processing steps including scaling, or texture or perspective processing.

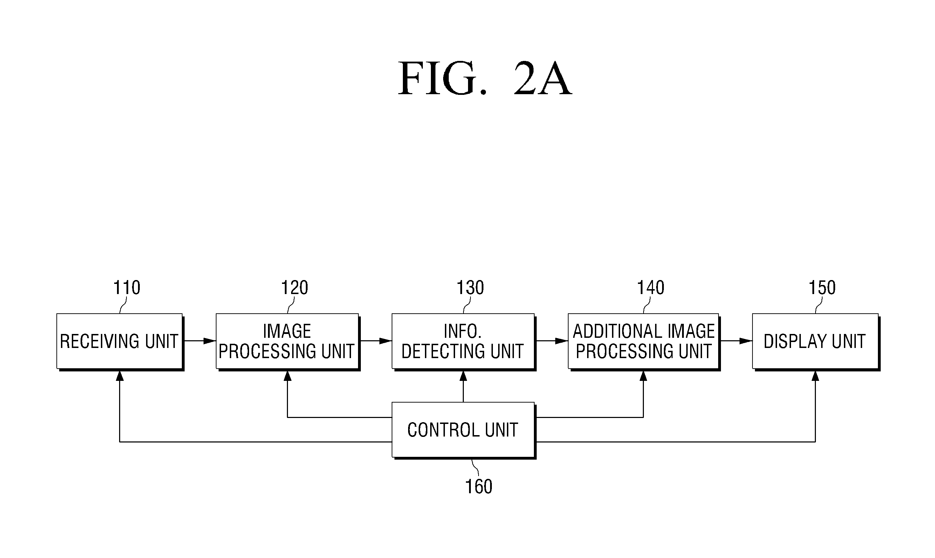

FIG. 2A is a block diagram illustrating a structure of a 3D image display apparatus according to an exemplary embodiment.

Although a 3D TV is shown in FlG. 2A to represent the 3D image display apparatus 100, one will understand that this is drawn only for illustrative purpose. Accordingly, the 3D image display apparatus 100 according to an exemplary embodiment may be implemented as a device with 3D Ul display function, including, for example, a digital TV, a mobile communication terminal, a mobile phone, a personal digital assistant (PDA), a Smart Phone, a Blue-ray device, a digital multimedia broadcasting (DMB) phone, a MP3 player, an audio device, a portable TV, a digital camera, and so on.

An image receiving unit 110 receives a stream containing therein content image and additional image received from a broadcasting station of satellite by wired or wireless manner and demodulates the received stream. The content image herein may correspond to a base transport stream of 2TS, and additional image may correspond to a dependent TS. Accordingly, an image is played back in 3D form as the base TS and dependent TS are played back alternately at the 3D image display apparatus 100.

The base TS herein refers to data as a basis of an image signal, which is used not only for playing back of a 3D image signal, but also for playing back of a 2D image signal.

If the base TS corresponds to one of left-eye image signal and right-eye image signal, the dependent TS may correspond to an image signal of the other.

The base TS may include at least one of video data, audio data, subtitle data, and application data.

The dependent TS may include 3D depth information corresponding to the base TS, such as, for example, 3D offset values. The 3D offset values may be set for each frame and based on a group of pictures (GOP) unit.

Further, the image receiving unit 110 may be connected to an external device such as a camera and thus receive a 3D image therefrom. The image receiving unit 110 may be wirelessly connected to the external device , or connected with a wire through an interface such as S-Video, component, composite, D-Sub, DVl, HDMI, etc. Since the 2D image processing method is well known for those skilled in the art, this will not be explained in detail, while an exemplary embodiment will be particularly explained with respect to the method of processing 3D images hereinbelow.

As explained above, the 3D image represents an image consisting of at least one frame, that is, the image in which left-eye image and right-eye image are included in one image frame, or each frame consists of left-eye image or right-eye image. That is, the 3D image represents an image which is generated according to one of various 3D formats.

Accordingly, a 3D image received at the image receiving unit 110 may be in many different formats. To be specific, the formats may include top-bottom, side by side, horizontal interleaving, vertical interleaving, or checker board, or sequential frame.

The image receiving unit 110 transfers the received 2D or 3D image to the image processing unit 120.

The image processing unit 120 represents processes including signal processing such as video decoding, format analyzing, or video scaling or adding GUI.

Particularly, the image processing unit 120 may generate a left-eye image and a right-eye image corresponding to one screen size (e.g., 1920*1080) using a 2D or 3D image format inputted to the image receiving unit 110.

By way of example, if the 3D image is in top-bottom, side by side, horizontal interleaving, vertical interleaving, or checker board, or sequential frame format, the image processing unit 120 extracts left-eye image portion and right-eye image portion from the respective image frames, scales-up or interpolates the extracted left-eye image and the right-eye image, and thus generates left-eye image and right-eye image to be provided to a viewer.

Further, if the 3D image is in general frame sequence format, the image processing unit 120 extracts left-eye image or right-eye image from the respective frames and takes necessary operations so that the images can be provided to the viewer.

Information regarding the inputted 3D image format may or may not be included in the 3D image signal.

For example, if information regarding the inputted 3D image format is included in the 3D image signal, the image processing unit 120 analyzes the 3D image and extracts the information regarding the format, and processes the received 3D image based on the extracted information. If the information regarding the format of the inputted 3D image is not included in the inputted 3D image, the image processing unit 120 processes the received 3D image based on a format inputted by a user or according to a pre-set format.

The image processing unit 120 time-divides the extracted left-eye image and right-eye image and transfers the images to a display unit 130 alternately. That is, the image processing unit 120 transfers the left-eye images and the right-eye images to the display unit 130 in the order of: right-eye image (R1) -> left-eye image (L1) -> left-eye image (L2) -> right-eye image (R2) -> and so on.

An information detecting unit 130 detects 3D depth information set for the main image signal. The 3D depth information herein may be provided in various forms including offset metadata, XML, section table, or descriptor.

An additional image processing unit 140 operates to process additional data other than content data, according to 3D depth information set for the content data. The additional data herein may include various types of data for which 3D depth information is not set, such as, for example, application data identical to a company's own Ul, data for PIP, or the like.

A display unit 150 outputs the left-eye images and the right-eye images output from the image processing unit 120 and provides the images to the user.

Additionally, the display unit 150 may display the additional data in which 3D depth information is implemented, along with the content data. The additional data herein may include the same 3D depth information as the corresponding content data and displayed.

A control unit 160 controls the overall operation of the 3D image display apparatus 100 according to a user command or preset options.

To be specific, the control unit 160 controls the image receiving unit 110 and the image processing unit 120 so that the 3D image is received, separated into left-eye image and right-eye image, and the separated left-eye image and right-eye image are scaled or interpolated to a size suitable for displaying on one single screen.

The control unit 160 may also control the display unit 150 so that the direction of polarization of an image provided through the display unit 150 is switched to conform to the left-eye image or right-eye image.

Additionally, the control unit 160 may control the operation of a Ul processing unit (not illustrated).

The Ul processing unit (not illustrated) may generate a 3D Ul element to be overlapped on an outputted 3D image, and inserts the generated 3D Ul element.

To be specific, the UI processing unit (not illustrated) may add 3D effect to the Ul by using the preset depth information to correspond to the content image.

Further, the Ul processing unit (not illustrated) may set and generate different depth values depending on the order of executing Ul elements or attributes of the Ul elements. The depth values herein refer to numerical values that represent the degrees of depth of a 3D image. The 3D image may provide the feeling of depth not only in vertical and horizontal directions, but also forward and backward directions with respect to a direction of a viewer's eyes. The 'feeling of depth' is determined based on the disparity between left-eye image and right-eye image. Accordingly, the depth values of the content list GUI corresponds to the disparities between left-eye GUI and right-eye GUl.

The Ul elements herein refer to a screen displaying texts or shapes including menu, warning message, time, or channel number on the display screen, and these may be overlapped on the displayed image.

By way of example, a warning message may be displayed as Ul element in OSD form according to a preset option or event.

Further, by manipulating an input device such as an operating panel or remote control and selecting a desired function from the menu, a viewer can cause the display screen to display UI element in OSD form such as main menu or submenu thereon.

The menus may include options that may be selected at the display apparatus, or items that may regulate the function of the display apparatus.

Further, the Ul processing unit (not illustrated) may carry out processing including, for example, 2D-3D conversion of UI element, regulation of transparency, color, size, or shape, or highlighting or animation effect.

A storage unit (not illustrated) may include a storage medium such as a memory or a hard disk drive (HDD) which stores therein various programs to operate the 3D image display apparatus 100. For example, the storage unit may include a ROM to store programs to carry out operations at the control unit 160, or a RAM to temporarily store therein data generated as the control unit 160 operates. The storage unit may additionally include an electrically erasable and programmable ROM (EEROM) to store various reference data.

A user interface unit (not illustrated) may transfer user commands received through the input such as a remote control or an input panel to the control unit 160.

The input panel may be a key pad including function keys, numeric keys, special keys, or text keys, or a touch screen.

A TS generating apparatus (not illustrated) to provide TS to the 3D image display apparatus 100 according to an exemplary embodiment may be provided, including a first TS transmitting unit (not illustrated), a second TS transmitting unit (not illustrated), and a modulating unit (not illustrated) which modulates the first TS (i.e., base TS) and the second TS (i.e., dependent TS) transmitted from the first and second TS transmitting units using various modulation formats.

The modulating unit (not illustrated) may be omitted depending on the network environment, in which case the first and second TS transmitting units (not illustrated) may take the role of the modulating unit (not illustrated).

The modulating unit (not illustrated) may be provided to correspond to the first and second TS transmitting units (not illustrated). That is, one modulating unit (not illustrated) may be provided to correspond to the first TS transmitting unit (not illustrated), and another modulating unit (not illustrated) may be provided to correspond to the second TS transmitting unit (not illustrated).

In one exemplary embodiment, the modulating unit (not illustrated) may modulate the first and second TS using various formats including amplitude-shift keying (ASK), frequency-shift keying (FSK), phase-shift keying (PSK), or quadrature amplitude modulation (QAM).

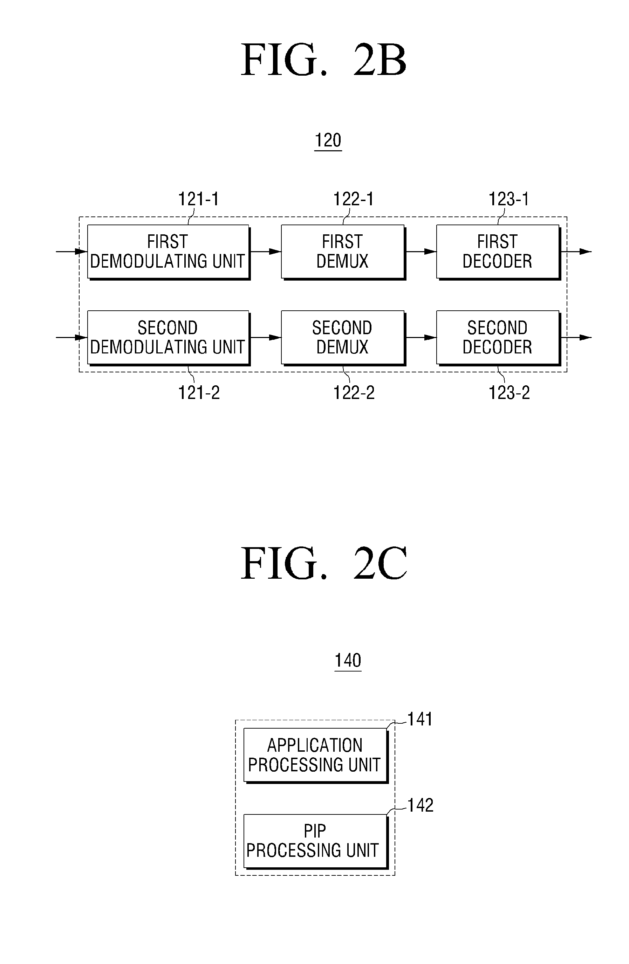

FIG. 2B is a block diagram illustrating a detailed structure of the image processing unit 120 of FIG. 2A.

Referring to FIG. 2B, the image processing unit 120 includes first and second demodulating units 121-1, 121-2, first and second demultiplexers (demuxes) 122-1, 122-2, and first and second decoders 123-1, 123-2.

The first and second demodulating units 121-1, 121-2 operate to demodulate received signals into TS. The first and second demodulating units 121-1, 121-2 may be provided to correspond to the first and second TS.

The first and second demultiplexers 122-1, 122-2 analyze the demodulated TS from the first and second demodulating units 121-1, 121-2 to separate the TS into first and second TS, and provides the separated first and second TS to the first and second decoders 123-1, 123-2, respectively. The first and second decoders 123-1, 123-2 herein may be implemented as a main video decoder 123-1 and a sub video decoder 123-2, respectively.

Although the first and second demultiplexers 122-1, 122-2 are shown as plural elements for illustrative purpose, one demultiplexer may also be implemented to carry out the specified function.

The first and second demultiplexers 122-1, 122-2 may separate the first and second TS into audio data respectively through analysis of TS such as packet identifier (PID).

The first and second decoders 123-1, 123-2 decode the data provided from the first and second demultiplexers 122-1, 122-2. The first and second decoders 123-1, 123-2 may decode, for example, the first and second transport data which are separated through the first and second demultiplexers 122-1, 122-2.

The video decoder may set a Codec such as H.264, AVC, or MVC, demultiplexers, and starts video and audio data processing by setting a corresponding video PID so that the decoded data is displayed.

According to an exemplary embodiment, the 3D image display apparatus 100 may be implemented as a TS play back apparatus such as a personal video recorder (PVR) or a digital video recorder (DVR) which plays back received stream.

FIG. 2C is a detailed block diagram of the additional image processing unit of FlG. 2A.

Referring to FIG. 2C, the additional image processing unit 120 may include an application processing unit 141 and a PIP processing unit 142.

The application processing unit 141 applies the 3D depth information, which is detected through the information detecting unit 130, to the application data. The application data herein may be Ul data such as OSD (e.g., company's own Ul) which is not included in the content data.

The PIP processing unit 142 applies the 3D depth information detected through the information detecting unit 130 to the PIP screen.

Accordingly, even data such as OSD or PIP screen for which 3D offset values have not been set according to broadcast signal standards, may be provided with 3D effect.

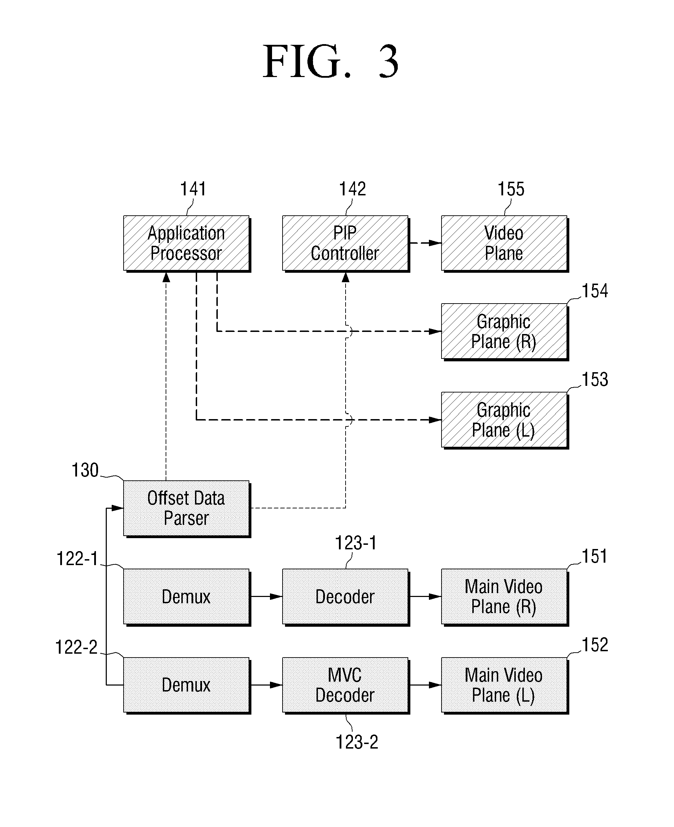

FIG. 3 is a view provided to explain an example of a 3D image display apparatus according to an exemplary embodiment.

The demultiplexers 122-1, 122-2 separate the received and demodulated TS into first and second TS. The first and second TS may include base stream and dependent stream. Further, the base stream may be provided in the form of AVC codec, and the dependent stream may be provided in the form of multiview video coding (MVC) codec. Metadata is generally provided to indicate the degree of depth of 3D within the dependent stream to regulate the depth of the content within the stream. Representative examples of such metadata include offset metatdata.

Although a plurality of demultiplexers 122-1, 122-2 may be provided as drawn to correspond to the respective stream, one will understand that depending on situations, a single demultiplexer may be implemented.

The first and second TS separated at the demultiplexers 122-1, 122-2 are provided to the decoder 123-1 and the MVC decoder 123-2.

The streams processed at the decoder 123-1 and the MVC decoder 123-2 may be provided to a main video plane 151 and a main video plane 152. The main video planes 151, 152 may become right-eye image and left-eye image, or left-eye image and right-eye image.

An offset meta parser 130 may extract offset metadata from the dependent stream separated at the demultiplexer 122-2 to parse the offset value.

The offset value parsed at the offset data parser 130 is provided to the application processor 141 and the PIP controller 142.

The application processor 141 may provide 3D effect by providing graphic planes 153, 154 to the application image such as an OSD or a Ul based on the offset values parsed at the offset data parser 130. The graphic plane 153 herein may correspond to the left-eye image, and the graphic plane 154 may correspond to the right-eye image.

Further, the PIP controller 142 may provide 3D effect by applying the offset value parsed at the offset data parser 130 to the PIP screen and thus provide the video plane 155.

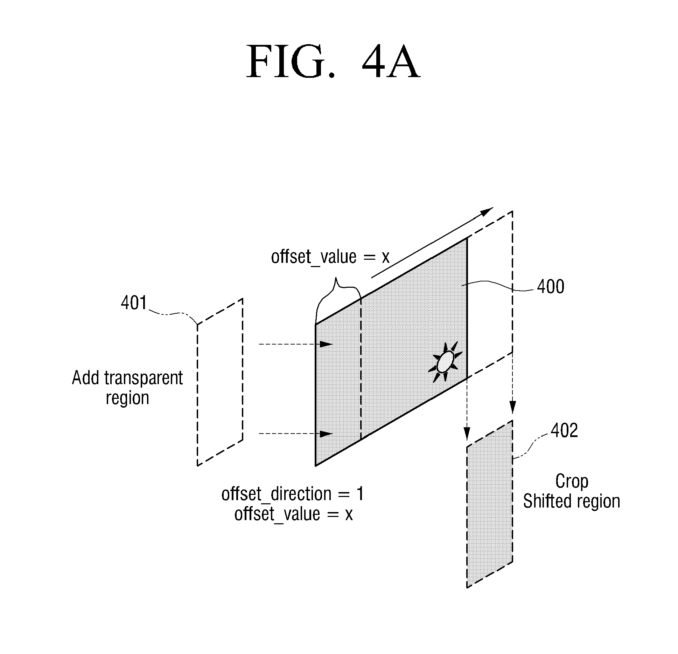

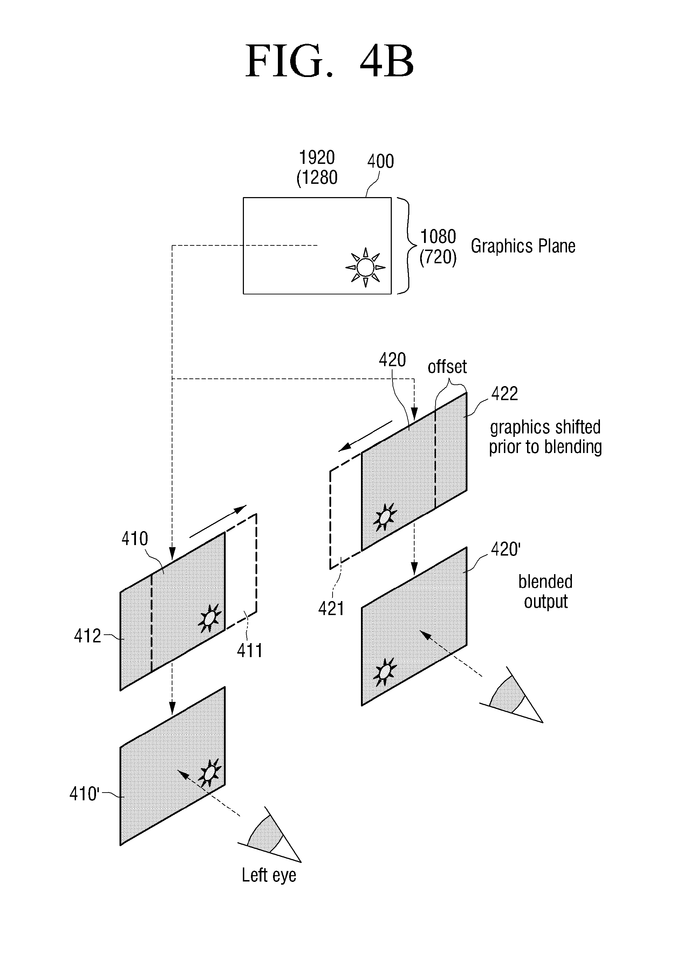

FIGS. 4A and 4B are views provided to explain the concept of 3D offset values to help understand an exemplary embodiment.

Referring to FIG. 4A, the offset value represents a spot on a displayed screen 400 on which a user's eyes focus. The 3D effect may be controlled by applying the offset value to the graphic plane or the like.

Referring to FlG. 4B, if a graphic plane moves to 411, 421 on left and right sides as much as the offsets 412 and 422 in the left-eye image and right-eye image 410, 420, the image may appear to pop out of or sink into the screen (410', 420') depending on the offset values.

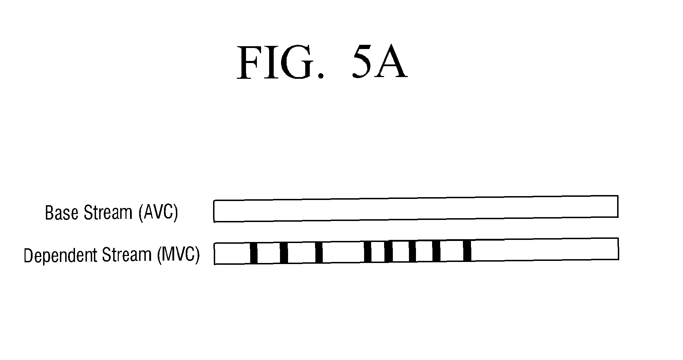

FIG. 5A is a view provided to explain a form of 3D information insertion according to an exemplary embodiment.

Referring to FIG. 5A, playing back 3D stream by 2TS utilizes a base stream and a dependent stream. ln one example, the base stream is provided in AVC codec form, and the dependent stream is provided in the MVC codec form. Metatdata may generally be provided to indicate the depth of the 3D in the dependent stream to regulate the depth of the content within the stream. One representative example is offset metadata.

The offset metadata is a collection of offset values to be applied for the respective frames to bring respective frames to the viewer's focus. The offset values may vary depending on the respective frames.

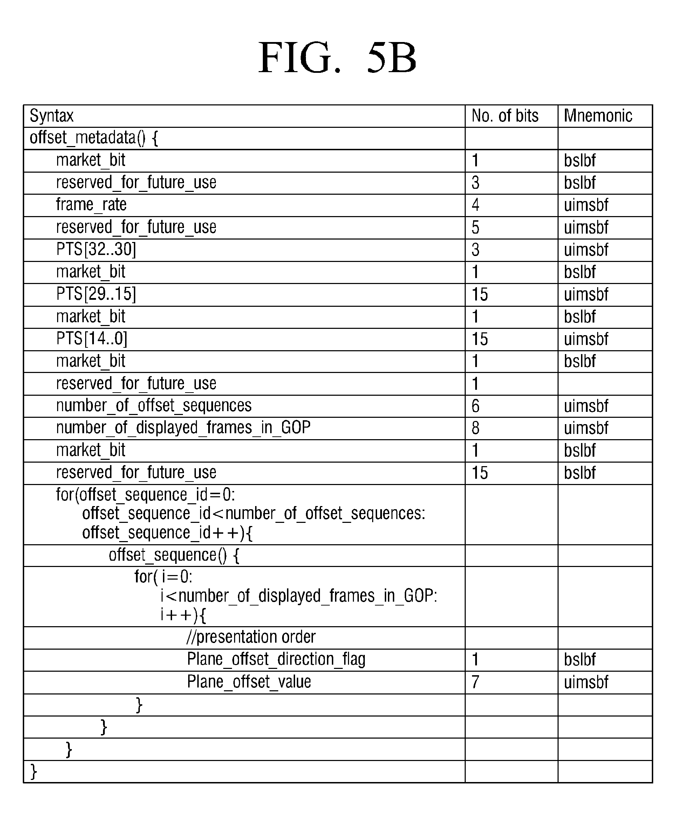

FIG. 5B is a view illustrating a form of offset metadata according to an exemplary embodiment.

Referring to FIG. 5B, the Blu-ray standard uses offset metadata. However, the offset values may be provided in the form of XML, a section table, or a descriptor.

For the Blu-ray standard, the offset values as illustrated in FIG. 5B are applied to the respective frames and the content within the stream is moved according to these values.

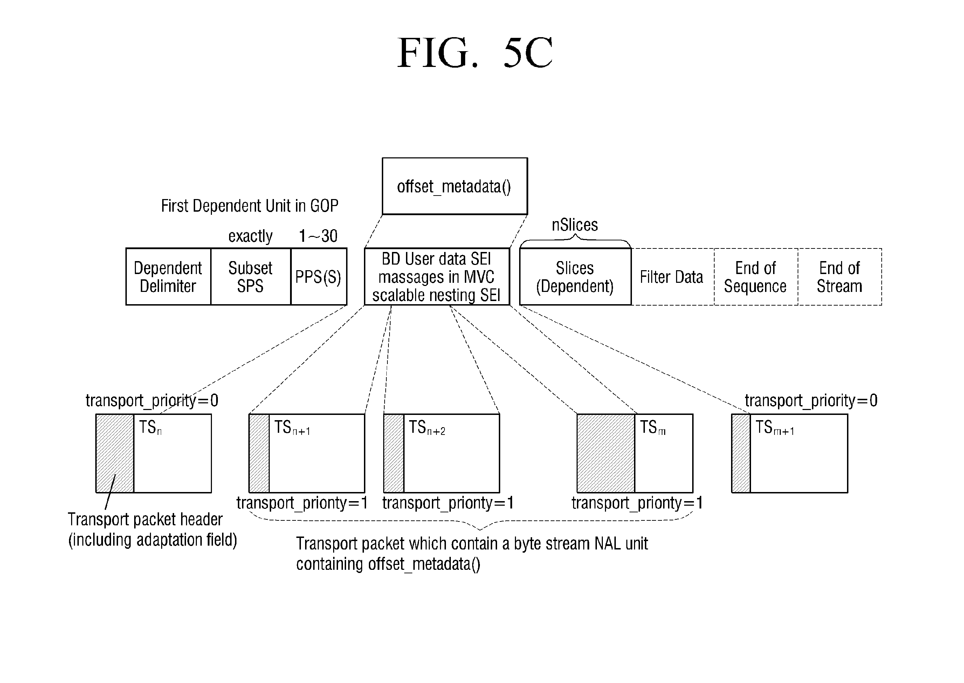

FlG. 5C is provided to explain a method for inserting 3D information according to an exemplary embodiment.

Referring to FIG. 5C, M2TS used in Blu-ray standard is explained for illustrative purpose. However, it will be understood that the form of data carrying the offset data may vary depending on the broadcast signal standard. By way of example, the data may be implemented in XML form, or bit-wise listed section table. The data may also be implemented in the form of an additionally-provided descriptor.

As illustrated in FlG. 5C, according to Blu-ray specification, Offset_metadata is acquired within the stream. Offset_metadata may be positioned in the front side of GOP.

From Offset_metadata as extracted, it is possible to acquire a list of corresponding frames and offset value.

For example, if PTS is inserted successively in 100 frames from 10000 up to 20000, 100 offset values may be generated and these values may be different from each other. The generated offset value list applies the offset upon reaching Start PTS 10000, starting from a frame that corresponds to 10000.

The offset value to be applied in the manner explained above may be considered to be a representative value that brings the frame to the user's focus, and 3D effect may be implemented with the corresponding values for the PIP or Ul resource used in the system.

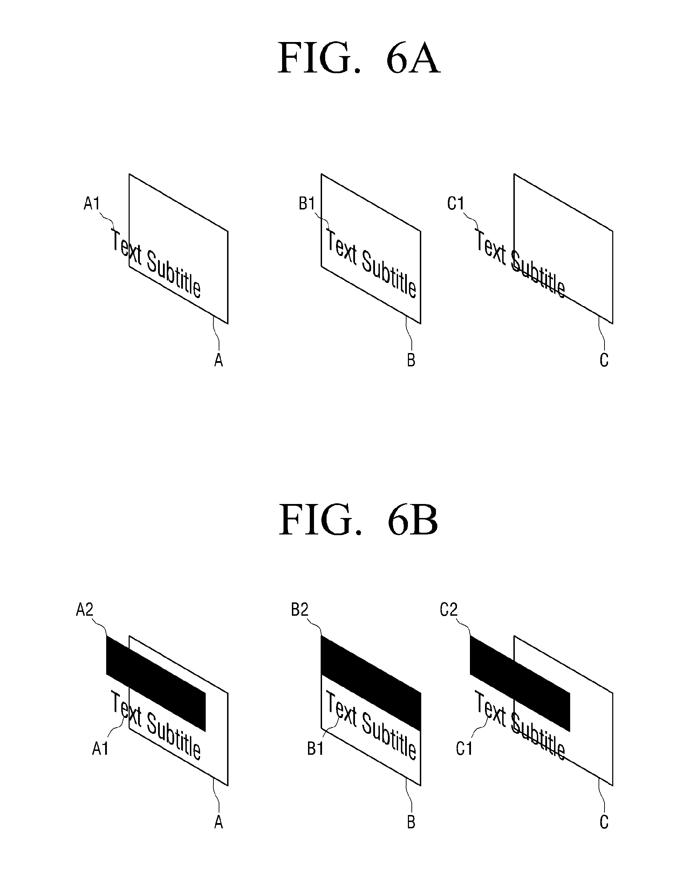

FIGS. 6A to 6C are views provided to explain a method for applying 3D of additional image according to an exemplary embodiment.

Referring to FIG. 6A, in one example, a process of controlling text subtitle (A1, B1, C1) is illustrated. That is, FIG. 6A illustrates the process of expressing data (subtitle) within the stream. Although the representative frames (A, B, C) are drawn for illustrative purpose in FIG. 6A, the degree of depth viewed by the user may vary in each frame.

Unless offset is taken into consideration, when Ul (A2, B2, C2) such as an OSD is displayed on a display illustrated in FlG. 6A, the resultant image appears with a limited degree of depth. However, if the offset value is taken into consideration as illustrated in FIG. 6B, even the graphic image such as an OSD or application images (A2, B2, C2) can move dynamically according to the user's focus.

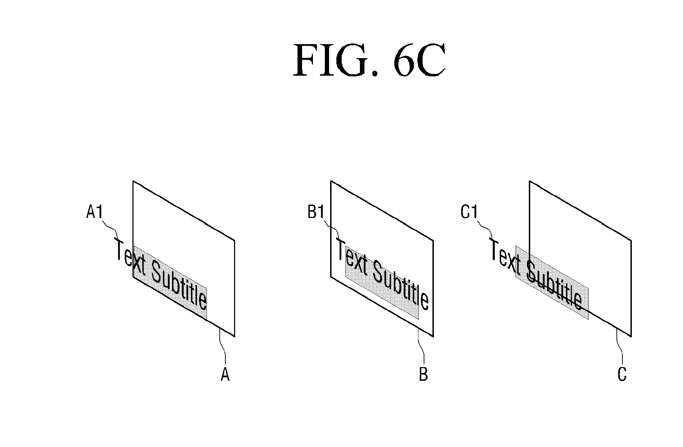

Further, as illustrated in FIG. 6C, depth may also be expressed by applying the offset value to a separate video plane representing a PIP image. For example, a PIP screen may be moved using the offset value and direction value acquired from the offset metadata.

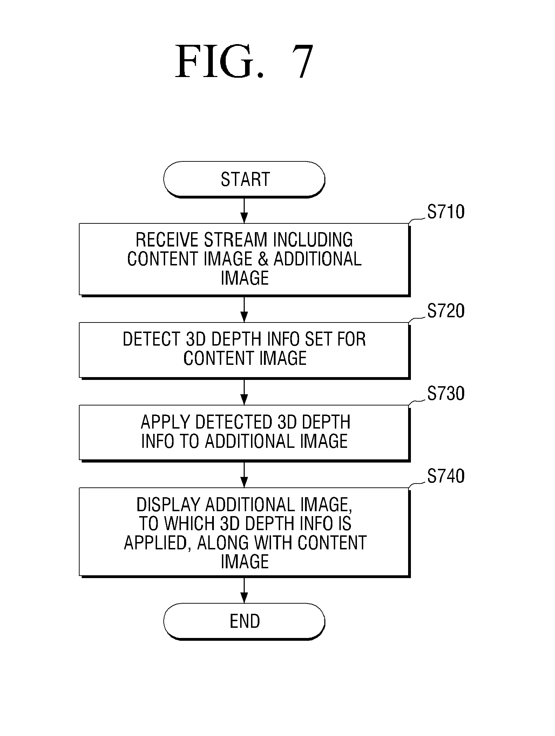

FIG. 7 is a flowchart provided to explain a display method according to an exemplary embodiment.

Referring to an image display method of a 3D image display apparatus according to an exemplary embodiment illustrated in FlG. 7, at S710, if TS including content image and additional image is received, at S720, preset 3D depth information for the content image is detected.

At S730, the detected 3D depth information is applied to the additional image.

At S740, the additional image, to which the 3D depth information is applied, is displayed along with the content image.

The TS herein may be a 2TS that includes a first TS corresponding to one of left-eye image or right-eye image of the 3D TS and a second TS corresponding to the other image of the 3D TS.

Further, the first TS corresponds to the base TS and the second TS corresponds to the dependent TS. The 3D information may be included in the dependent TS.

Further, the additional image may be at least one of an OSD image, an application image and a PIP image.

Further, the first and second TS may be displayed alternately.

Further, the additional image may be displayed with the same 3D depth information as that of the corresponding content image.

Further, the 3D depth information may be set for the respective frames that form the TS.

Accordingly, 3D effect can be provided even in displaying graphic images, application images or a PlP screen.

The image display method explained above may be implemented in the form of program commands to be executed by various computing means and recordable on a computer-readable recording medium. Herein, the computer-readable recording medium may include program command, data file or data structure singly or in combination. The program commands recorded on the recording medium may be designed and constructed specifically for the disclosed inventive concept or may be the conventionally-known and used by those skilled in the art in the computer software field.

The computer-readable recording medium may include magnetic media such as hard disk, floppy disk or magnetic tape, optical media such as CD-ROM or DVD, magnetooptical media such as floppy or optical disk, or hardware devices such as ROM, RAM or flash memory which are specifically constructed to record and carry out program commands. The recording medium may also include a transmitting medium such as an optic or metal line, or waveguide which transmits a signal to designate program command or data structure.

Further, the program commands may include not only mechanical codes written by a compiler, but also higher-level language code that can be executed on a computer using interpreter or the like. The hardware device explained above may be designed to operate as one or more software modules to carry out the operation of the inventive concept, or the opposite is possible.

Those skilled in the art will be able to understand that various details may be implemented without requiring changes to the technical spirit or essential features of the inventive concept.

Therefore, it will be understood that the exemplary embodiments explained above are illustrative and not to be limited. The scope of the inventive concept is defined by the following claims rather than the detailed description, and it will be interpreted that all possible changes or modified forms derived from the meaning and scope or equivalents of the claims fall within the scope of the inventive concept.

Although a few preferred embodiments have been shown and described, it will be appreciated by those skilled in the art that various changes and modifications might be made without departing from the scope of the invention, as defined in the appended claims.

## Claims

1. A three dimensional (3D) image display apparatus comprising:
a receiving unit which receives a transport stream (TS) including a content image and an additional image;
an information detecting unit which detects 3D depth information for the content image;
an additional image processing unit which applies the 3D depth information detected by the information detecting unit to the additional image; and
an output unit which displays the additional image, to which the 3D depth information is applied, along with the content image.

2. The 3D image display apparatus of claim 1, wherein the TS is a 2 transport streams (2TS) that includes a first TS corresponding to one of left-eye image and right-eye image of a 3D TS and a second TS corresponding to the other one of the left-eye image and right-eye image of the 3D TS.

3. The 3D image display apparatus of claim 2, wherein the first TS is a base TS and the second TS is a dependent TS, and the 3D depth information is included in the dependent TS.

4. The 3D image display apparatus of one of claims 1 to 3, wherein the additional image is at least one of an on-screen display image, an application image and a picture-in-picture image.

5. The 3D image display apparatus of one of claims 2 to 4, wherein the first and second TS are displayed alternately.

6. The 3D image display apparatus of one of claims 1 to 5, wherein the additional image and the content image are displayed with the same 3D depth information.

7. The 3D image display apparatus of one of claims 1 to 6, wherein the 3D depth information is set for respective frames that form the TS.

8. An image display method of a three dimensional (3D) image display apparatus, the method comprising:
receiving a transport stream (TS) including a content image and an additional image;
detecting 3D depth information for the content image;
applying the detected 3D depth information to the additional image; and
displaying the additional image, to which the 3D depth information is applied, along with the content image.

9. The image display method of claim 8, wherein the TS is a 2 transport streams (2TS) that includes a first TS corresponding to one of left-eye image and right-eye image of a 3D TS and a second TS corresponding to the other of the left-eye image and right-eye image of the 3D TS.

10. The image display method of claim 9, wherein the first TS is a base TS and the second TS is a dependent TS, and the 3D depth information is included in the dependent TS.

11. The image display method of one of claims 8 to 10, wherein the additional image is at least one of an on-screen display image, an application image and a picture-in-picture image.

12. The image display method of one of claims 9 to 11, wherein the first and second TS are displayed alternately.

13. The image display method of one of claims 8 to 12, wherein the additional image and the corresponding content image are displayed with the identical 3D depth information.

14. The image display method of one of claims 8 to 13, wherein the 3D depth information is set for respective frames that form the TS.
